# DEMANDE DE BREVET EUROPEEN

(11) **EP 1 249 301 A1**
(43) Date de publication de la demande: **16.10.2002**
(21) Numéro de dépôt: 02290850.3
(22) Date de dépôt: 11.04.2002
(51) Int. Cl.: B23K 26/42, B23K 26/067, B23K 26/32

(54) **Dispositif et procédé associé de soudage laser dit bi-passes**

(30) Priorité: 11.04.2001 FR 0104946
(71) Demandeur: Renault s.a.s., 92100 Boulogne Billancourt (FR)
(72) Inventeur: Criqui, Bernard, 92150 Suresnes (FR); Goby, Ludovic, 75019 Paris (FR); Habert, Patrick, 75106 Paris (FR); Joly, Marion, 78000 Versailles (FR)

(57) **Abrégé**

L'invention concerne un dispositif et un procédé associé de soudage d'un empilement de tôles comprenant au moins deux tôles (10, 15) superposées dont l'une au moins est recouverte d'un revêtement métallique au moins sur sa face interne (12, 16) adjacente à l'autre tôle, le dispositif de soudage comprenant une tête de préchauffage (20), une tête de chauffage (21) et une source laser (22) fixées sur un même bras support (23) susceptible de se déplacer.

Selon l'invention, la source laser (22) alimente alternativement :
- soit la tête de préchauffage (20), pour dégager une zone non recouverte par vaporisation locale du revêtement métallique et évacuation des vapeurs, et
- soit la tête de chauffage (21), pour souder l'empilement de tôles par fusion locale de chaque tôle dans une zone (46) comprise dans la zone non revêtue.

## Description

L'invention concerne un procédé et un dispositif associé de soudage d'un empilement de tôles revêtues.

Plus particulièrement, l'invention concerne un procédé et un dispositif associé de soudage d'un empilement comprenant au moins deux tôles dont l'une au moins est recouverte d'un revêtement métallique ayant une température de vaporisation inférieure à une température de fusion de l'une au moins des tôles à souder.

De tels procédés de soudage sont par exemple utilisés en carrosserie automobile, où il est fréquent d'utiliser des tôles recouvertes d'une mince couche d'un revêtement à base de zinc ou d'alliage de zinc, revêtements ayant des propriétés anticorrosion.

Un d'assemblage procédé connu pour ce type d'application est le soudage laser par transparence. Il consiste à chauffer jusqu'à la fusion locale, par l'intermédiaire d'un faisceau laser, la tôle supérieure 10 et la tôle inférieure 15 (cf. figure jointe).

Cependant, avec ce procédé, un problème apparaît au niveau du cordon de soudure, notamment lorsqu'on soude des tôles revêtues de zinc ou d'oxyde de zinc est utilisé. En effet, la température de vaporisation du revêtement (environ 900°C) étant inférieure à la température de fusion des tôles d'acier (environ 1500°C), il se produit une vaporisation du revêtement qui est préjudiciable à la qualité de la soudure.

Si la distance entre la tôle 10 et la tôle 15 n'est pas suffisante, les vapeurs de zinc ne peuvent s'évacuer que par la zone de métal en fusion créée par le faisceau laser. Des bulles de vapeur de zinc se forment alors dans le bain liquide, entraînant la formation de porosités à l'intérieur de la soudure, ce qui affecte l'esthétique et surtout la qualité de la soudure : la soudure étant poreuse, sa résistance mécanique est plus faible et son étanchéité n'est pas assurée.

Par ailleurs, les vapeurs de zinc provoquent des explosions du bain liquide métallique et des projections de métal en fusion vers l'extérieur des tôles. Ces projections diminuent la qualité de la soudure par manque de matière. Ces projections peuvent également endommager les tôles à l'extérieu de la zone à souder.

Pour remédier à ces problèmes, il est proposé, dans la demande de brevet français n°2 798 084, d'utiliser un procédé de soudage au laser par transparence dit "bi-passes" comprenant deux étapes.

Au cours d'une étape de préchauffage local, une première source laser est utilisée pour chauffer localement les tôles à une première température qui est supérieure à la température de vaporisation du revêtement métallique et inférieure à la température de fusion de l'une ou l'autre des tôles.

Cette étape de préchauffage a pour conséquence l'évacuation partielle ou totale du revêtement par le passage de l'état solide à l'état liquide ou gazeux du zinc. Une zone moins revêtue en zinc, à l'interface entre les tôles, est ainsi dégagée à la fin de la première étape, pour permettre le soudage dans une deuxième étape.

Ensuite, au cours d'une étape de chauffage, une deuxième source laser est utilisée pour chauffer l'empilement de tôles dans une zone comprise dans la zone non revêtue, à une deuxième température supérieure à la température de fusion de l'une et de l'autre des tôles, pour permettre la soudure des deux tôles sur une zone de largeur inférieure à la largeur de la zone non revêtue (car dézinguée lors de l'étape de préchauffage).

L'utilisation de ce procédé en deux étapes permet d'améliorer considérablement la qualité de la soudure . En effet, la première étape permet de réduire localement la quantité de zinc du revêtement métallique par chauffage, et ainsi de souder les tôles sans défaut créé par les vapeurs de zinc dans le bain liquide métallique.

Cependant ce procédé est particulièrement onéreux à mettre en oeuvre car il nécessite :
- soit l'utilisation de deux sources laser, l'une pour l'étape de préchauffage et de vaporisation du revêtement métallique, l'autre pour l'étape de chauffage en vue du soudage,
- soit l'utilisation d'une seule source laser de puissance double, dont le faisceau est partagé en deux, une partie du faisceau étant utilisée pour le préchauffage et une partie du faisceau étant utilisée pour le chauffage (ou soudage).

L'invention a pour but de proposer un dispositif et un procédé associé de soudage dit "bi-passes", dont la mise en oeuvre est moins onéreuse que celle d'un dispositif ou d'un procédé bi-passes selon l'art antérieur, utilisant deux sources laser ou une unique source de puissance double.

Dans ce but, l'invention propose un procédé de mise en oeuvre du dispositif décrit ci-dessus qui comprend les étapes suivantes :
E1 : empilage sans jeu des tôles,
E2 : déplacement d'un bras support, portant une tête de préchauffage (20), une tête de chauffage (21) et une source laser (22),
E3 : alimentation de la tête de préchauffage par la source laser pour dégager une zone non revêtue par vaporisation locale du revêtement métallique et évacuation de vapeurs formées,
E4 : alimentation de la tête de chauffage par la source laser pour souder l'empilement de tôles par fusion locale de chaque tôle dans une première zone de soudure de longueur L1 comprise dans la zone non revêtue, les étapes E3, E4 étant réalisées successivement pendant l'étape E2.

Ainsi, dans l'invention on se propose d'utiliser une seule source laser, mais différemment : plutôt que d'utiliser une seule source en partageant sa puissance entre l'étape de préchauffage et l'étape de soudage, on propose dans l'invention d'utiliser une seule source en temps partagé.

En effet, comme les étapes E3 et E4 ne sont pas réalisées simultanément, il n'est pas nécessaire de disposer de deux sources ou de partager la puissance d'une source unique pour les réaliser. A la fin de l'étape E4, on obtient ainsi un tiret de soudure de longueur L1.

De préférence, les étapes E3 à E4 sont répétées plusieurs fois en parallèle de l'étape E2 pour obtenir plusieurs zones de soudure (ou tirets) de longueur L1, distantes l'une de l'autre d'une longueur L2.

Selon une variante, le procédé peut également comprendre une étape E5, au cours de laquelle la source laser est maintenue inactive, les étapes E3 à E5 étant dans ce cas réalisées successivement en parallèle de l'étape E2.

De préférence, les étapes E3 à E5 sont répétées plusieurs fois en parallèle de l'étape E2 pour obtenir plusieurs zones de soudure (ou tirets) de longueur L1, distantes l'une de l'autre d'une longueur L2.

De préférence encore, le procédé comprend également une étape d'initialisation E0, au cours de laquelle la distance entre la tête de préchauffage et la tête de chauffage est réglée pour fixer la distance L1. On obtient ainsi des tirets de soudure de la longueur désirée, par exemple en fonction de paramètres de résistance mécanique de la soudure souhaités.

De préférence également, la durée de l'étape E5 est aussi ajustée au cours de l'étape d'initialisation. Ceci permet de fixer la distance L2 entre deux tirets de soudure, par exemple en fonctions de paramètres de résistance mécanique de la soudure souhaités. On notera que si l'étape E5 n'est pas réalisée (ou a une durée nulle) , alors les longueurs L1 et L2 sont identiques.

L'invention a également pour objet un dispositif de soudage d'un empilement de tôles comprenant au moins deux tôles superposées dont l'une au moins est recouverte d'un revêtement métallique au moins sur sa face interne adjacente à l'autre tôle, le dispositif de soudage comprenant une tête de préchauffage, une tête de chauffage et une source laser fixées sur un même bras support susceptible de se déplacer.

Selon l'invention, la source laser comprend des moyens de connexion pour alimenter alternativement :
- soit la tête de préchauffage, pour dégager une zone non revêtue par vaporisation locale du revêtement métallique et évacuation des vapeurs, et
- soit la tête de chauffage, pour souder l'empilement de tôles par fusion locale de chaque tôle dans une zone comprise dans la zone non revêtue.

Ainsi, le dispositif selon l'invention comprend une seule source laser. Ceci limite évidemment les coûts d'un tel dispositif. La qualité de la soudure obtenue est identique à celle obtenue à l'aide d'un dispositif selon l'art antérieur, notamment l'art antérieur décrit dans la demande de brevet français n°2 798 084, puisque, dans l'invention comme dans l'art antérieur, la couche de revêtement métallique est supprimée et évacuée localement avant l'étape de soudure.

Dans un mode de réalisation particulier, la source laser comprend une première sortie relié à la tête de préchauffage par l'intermédiaire d'une première fibre optique et une deuxième sortie reliée à la tête de chauffage par l'intermédiaire d'une deuxième fibre optique.

La connexion de la source laser à l'une ou l'autre des têtes par fibre optique permet une bonne maîtrise du faisceau lumineux émis par la source laser : pas de pertes d'énergie, liberté de direction maximale, etc.

De préférence, le bras support de la source laser, de la tête de préchauffage et de la tête de chauffage comprend également des moyens pour régler la distance entre la tête de préchauffage et la tête de chauffage. Ceci permet de régler la longueur de la soudure obtenue, comme on le verra mieux par la suite.

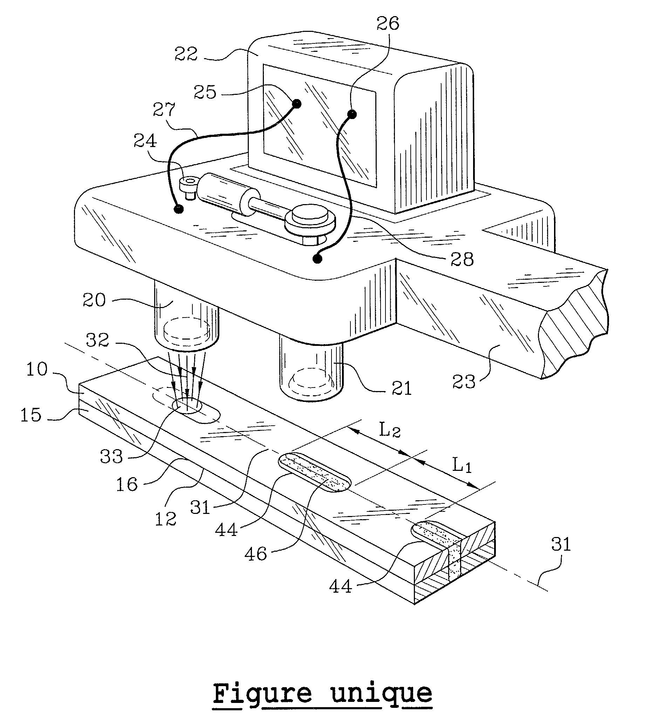

L'invention sera mieux comprise et d'autres caractéristiques et avantages apparaîtront à la lecture de la description qui va suivre, d'un mode de mise en oeuvre du procédé selon l'invention et du dispositif de soudage associé. La description fait référence au dessin annexé dans lequel la figure unique représente un dispositif de soudage selon l'invention, en cours d'utilisation.

Dans l'exemple ci-dessous, le dispositif de l'invention est utilisé pour le soudage d'un empilement de deux tôles 10, 15 ayant chacune une face galvanisée 12, 16, c'est-à-dire une face recouverte d'un revêtement de zinc ou d'alliage de zinc.

L'épaisseur des tôles est par exemple de l'ordre de 0,6 à 2 mm et l'épaisseur de la couche de revêtement est par exemple de l'ordre de 8 à 12 µm dans le cas d'application au domaine de la construction automobile.

Les deux tôles sont superposées sans jeu vertical, de façon que les couches de zinc soient en contact dans les zones à souder.

Le soudage est réalisé en deux étapes : une étape de préchauffage par laser, pour évacuer localement le ou les revêtement(s) de zinc, puis une étape de chauffage par laser, pour effectuer le soudage. Les deux étapes sont effectuées au cours d'une même passe en alternance, avec la même source, et on obtient des tirets de soudure de longueur L1, distants l'un de l'autre d'une longueur L2 égale à L1.

Le dispositif utilisé comprend essentiellement une tête de préchauffage 20, une tête de chauffage 21 et une source laser 22. La tête de préchauffage 20 et la source laser 22 sont fixées sur le bras 23. Un moyen de positionnement 24 fixé d'une part sur le bras 23 et d'autre part sur la tête de chauffage 21 permet de régler la distance entre la tête de préchauffage 20 et la tête de chauffage 21.

La source laser 22 comprend deux sorties 25, 26, et alimente soit l'une soit l'autre en fonction d'une commande (non représentée).

La tête de préchauffage 20 et la tête de chauffage 21 sont connectées respectivement à la sortie 25 et à la sortie 26 chacune par l'intermédiaire de fibres optiques 27, 28.

Le dispositif est utilisé de la manière suivante. Le bras 23 est déplacé selon une trajectoire 31 indiquant la position de la soudure à réaliser. Le bras est déplacé de sorte que le point d'impact d'un faisceau émis par la tête 20 (ou la tête 21) suive la trajectoire 31, qui peut-être droite ou courbe.

A un instant t0, et pendant un premier temps T, la tête de préchauffage 20 est alimentée par la source laser 22 et l'étape de préchauffage commence. La figure présente le dispositif à un instant compris entre t0 et t0+T.

Un faisceau d'énergie 32 émis par cette source vient préchauffer par rayonnement une zone d'impact 33, de forme sensiblement circulaire ou elliptique. La zone d'impact se déplace le long de la trajectoire 31 au fur et à mesure de l'avancement du bras 23. La zone 44 impactée par le faisceau laser 32 pendant le temps T a ainsi une forme sensiblement oblongue.

L'énergie fournie par le faisceau 32 est transférée dans les tôles 10, 15 par conduction. La température atteint, au niveau des faces galvanisées, une valeur supérieure à 900°C. Le revêtement est vaporisé localement et, après évacuation des vapeurs, une zone non recouverte de revêtement est formée à l'interface entre les deux tôles 10, 15, de forme similaire à celle de la zone impactée 44 mais de taille légèrement plus petite.

A un instant t0+T, la source laser 22 n'alimente plus la tête 20, mais alimente au contraire la tête de chauffage 21. La distance entre les deux têtes 20, 21 est réglée de sorte que, à l'instant t0+T, la tête de chauffage 21 soit à hauteur du début de la zone 44 impactée au cours du préchauffage précédent. L'étape de chauffage commence alors, et est exécutée entre les instants t0+T et t0+2T.

La tête de chauffage 21 permet le soudage à haute densité d'énergie selon un mode dit "key-hole".

Un faisceau d'énergie (non représenté sur la figure) émis par cette source vient chauffer par rayonnement une deuxième zone d'impact (non représentée), de forme sensiblement circulaire ou elliptique mais de taille inférieure à la première zone d'impact 33. La deuxième zone d'impact se déplace également le long de la trajectoire 31 au fur et à mesure de l'avancement du bras 23.

L'énergie fournie par la tête de chauffage 21 est transférée dans les tôles 10, 15, ce qui permet de fondre les deux tôles 10, 15 dans une troisième zone similaire à la zone 46. Cette troisième zone a une forme oblongue (en vue de dessus) et une hauteur approximativement égale à la hauteur de l'empilement de tôle 10, 15. Cette troisième zone forme un tiret de soudure.

L'étape de préchauffage et l'étape de chauffage sont ensuite répétées pour effectuer d'autres tirets de soudure.

Les tirets obtenus dans cet exemple sont de longueur L1 et sont distants l'un de l'autre d'une longueur L2 = L1. La longueur L1 est fixée essentiellement par la distance entre les têtes 20, 21 et la vitesse de déplacement du bras 23.

Ladite vitesse de déplacement du bras est elle-même fixée en fonction de paramètres tels que l'épaisseur des tôles, l'épaisseur de la couche de revêtement, la puissance de la source laser, etc.

La longueur L2 peut être modifiée par rapport à la longueur L1 : il suffit pour cela de ne pas alimenter les têtes 20, 21 par la source 22 pendant une durée T2 entre la réalisation d'une étape de chauffage et la réalisation suivante d'une étape de préchauffage, tout en maintenant le bras 23 en mouvement.

D'autres caractéristiques concernant par exemple la réalisation de la tête de préchauffage, de la tête de chauffage, le choix de la source laser, etc. peuvent être obtenus dans la demande de brevet français n°2 798 084.

## Revendications

1. Procédé de soudage d'un empilement de tôles comprenant au moins deux tôles (10, 15) superposées dont l'une au moins est recouverte d'un revêtement métallique au moins sur sa face interne (12, 16) adjacente à l'autre tôle, le procédé comprenant les étapes suivantes :
E1 : empilage sans jeu des tôles,
E2 : déplacement d'un bras support (23), portant une tête de préchauffage (20), une tête de chauffage (21) et une source laser (22),
E3 : alimentation de la tête de préchauffage (20) par la source laser (22) pour dégager une zone non revêtue par vaporisation locale du revêtement métallique et évacuation de vapeurs formées,
E4 : alimentation de la tête de chauffage (21) par la source laser (22) pour souder l'empilement de tôles (10, 15) par fusion locale de chaque tôle dans une première zone de soudure (46) de longueur L1 comprise dans la zone non revêtue,
les étapes E3, E4 étant réalisées successivement en parallèle de l'étape E2.

2. Procédé selon la revendication 1, **caractérisé en ce que** les étapes E3 à E4 sont répétées plusieurs fois en parallèle de l'étape E2 pour obtenir plusieurs zones de soudure (46) de longueur L1, distantes l'une de l'autre d'une longueur L2.

3. Procédé selon l'une des revendications 1 à 2, **caractérisé en ce qu'**il comprend également une étape d'initialisation E0, au cours de laquelle la distance entre la tête de préchauffage (20) et la tête de chauffage (21) est réglée pour fixer la distance L1.

4. Procédé selon la revendication 1, **caractérisé en ce qu'**il comprend également une étape E5, au cours de laquelle la source laser (22) est maintenue inactive, les étapes E3 à E5 étant réalisées successivement en parallèle de l'étape E2.

5. Procédé selon la revendication 4, **caractérisé en ce que** les étapes E3 à E5 sont répétées plusieurs fois en parallèle de l'étape E2 pour obtenir plusieurs zones de soudure (46) de longueur L1, distantes l'une de l'autre d'une longueur L2.

6. Procédé selon l'une des revendications 4 à 5, **caractérisé en ce qu'**il comprend également une étape d'initialisation E0, au cours de laquelle la distance entre la tête de préchauffage (20) et la tête de chauffage (21) et la durée de l'étape E5 sont ajustées pour fixer la distance L2.

7. Dispositif de soudage d'un empilement de tôles comprenant au moins deux tôles (10, 15) superposées dont l'une au moins est recouverte d'un revêtement métallique au moins sur sa face interne (12, 16) adjacente à l'autre tôle, le dispositif de soudage comprenant une tête de préchauffage (20), une tête de chauffage (21) et une source laser (22) fixées sur un même bras support (23) susceptible de se déplacer,
le dispositif étant **caractérisé en ce que** la source laser (22) comprend des moyens de connexion pour alimenter alternativement :
- soit la tête de préchauffage (20), pour dégager une zone non revêtue par vaporisation locale du revêtement métallique et évacuation des vapeurs, et
- soit la tête de chauffage (21), pour souder l'empilement de tôles par fusion locale de chaque tôle dans une zone (46) comprise dans la zone non revêtue.

8. Dispositif selon la revendication 7, **caractérisé en ce que** la source laser (22) comprend une première sortie relié à la tête de préchauffage (20) par l'intermédiaire d'une première fibre optique (27) et une deuxième sortie reliée à la tête de chauffage (21) par l'intermédiaire d'une deuxième fibre optique (28).

9. Dispositif selon l'une des revendications 7ou 8, **caractérisé en ce que** le bras support comprend également des moyens (24) pour régler la distance entre la tête de préchauffage (20) et la tête de chauffage (21).
